# EUROPEAN PATENT APPLICATION

(11) **EP 4 711 189 A1**
(43) Date of publication of application: **18.03.2026**
(21) Application number: 24822510.4
(22) Date of filing: 23.05.2024
(51) Int. Cl.: B60L 53/14, B60L 53/30, B60R 16/023

(54) **TOUCH NETWORK APPARATUS, INTELLIGENT VEHICLE, INTELLIGENT CONNECTED SYSTEM, AND TRAFFIC TRANSPORTATION SYSTEM**

(30) Priority: 15.06.2023 CN 202310711665
(71) Applicant: Wen, Yi, Lvliang, Shanxi 033099 (CN); Wen, Mingjin, Shanghai 200240 (CN)
(72) Inventor: WEN, Yi, Lvliang, Shanxi 033099 (CN)
(74) Representative: Chung, Hoi Kan
(86) International application number: PCT/CN2024/094942
(87) International publication number: WO 2024/255558

(57) **Abstract**

Disclosed in the present application are a touch network apparatus, an intelligent vehicle, an intelligent connected system, and a traffic transportation system. The touch network apparatus is installed on a vehicle. The intelligent connected system comprises a connected information system and a connected power supply system, wherein the connected power supply system comprises a contact network connected to the touch network apparatus, the contact network provides electric energy and basic sensing information for the vehicle, and the connected information system performs information interconnection on the contact network apparatus, the intelligent vehicle and the contact network to form the Internet of Vehicles; the intelligent vehicle installed with a touch network apparatus, and the intelligent connected system form a brand-new traffic transportation system, such that when the vehicle travels on a road with intelligent connected system facilities, electric energy and sensing information are provided by the intelligent connected system, and the vehicle is driven by a person or autonomously driven to travel forwards; and when the vehicle travels on a road without intelligent connected system facilities, power is provided by a battery, an internal combustion engine, etc., and the vehicle can be driven by a person or information is provided by a simple and convenient remote-control driving system, such that the vehicle can travel forward. Thus, the problems of charging, endurance and autonomous driving applications of electric vehicles are solved.

## Description

This application claims priority to a Chinese patent application filed with the China Patent Office on June 15, 2023, with application number CN202310711665.2 and application name "A Contact Network Device, Intelligent Automobile, Intelligent Connected System, and Transportation System", the entire contents of which are incorporated herein by reference.

### TECHNICAL FIELD

The present application relates to the field of transportation technology, and in particular to a touch-network device, an intelligent connected vehicle equipped with the touch-network device, an intelligent connected system that interacts with and is adaptably connected to the touch-network device, and a transportation system composed of the aforementioned touch-network device, intelligent vehicle, and intelligent connected system.

### BACKGROUND

Intelligent Connected Vehicle (ICV) refers to the organic combination of the Internet of Vehicles and smart cars. It is a new generation of cars equipped with advanced on-board sensors, controllers, actuators and other devices, and integrated with modern communication and network technologies to achieve intelligent information exchange and sharing among cars, people, cars, roads, and background, to achieve safe, comfortable, energy-saving, and efficient driving, and ultimately can replace human operation.

Intelligent connected vehicles are an emerging automotive system that spans technologies and industries. People have different understandings of them from different perspectives and backgrounds. Different countries have different definitions and names for intelligent connected vehicles, but the ultimate goal is the same, which is to have driverless cars that can drive safely on the road.

In a narrow sense, intelligent connected vehicles are equipped with advanced on-board sensors, controllers, actuators and other devices, and integrate modem communication and network technologies to achieve V2X intelligent information exchange and sharing (V2X refers to Vehicle to Everything; V2X mainly includes V2V (Vehicle to Vehicle), V2I (Vehicle to Infrastructure), V2N (Vehicle to Network), and V2P (Vehicle to Pedestrian). They have complex environmental perception, intelligent decision-making, collaborative control and execution functions, and can achieve safe, comfortable, energy-saving and efficient driving, and can eventually replace human operation.

In a broad sense, intelligent connected vehicles are a new generation of multi-vehicle systems that use vehicles as the main body and main node, integrate modem communication and network technologies, and enable vehicles and external nodes to share information and conduct collaborative control, so as to achieve safe, orderly, efficient and energy-saving driving.

Led by the National Intelligent Connected Vehicle Innovation Center, Tsinghua University, Road Science Research Institute of Ministry of Transport, Institute of Transport Management Science of Ministry of Public Security, China First Automobile Co., Ltd., Huawei Technology Co., Ltd., Beijing Beidou Xingtong Navigation Technology Co., Ltd., participated in the design of Reference Framework 2.0 of Intelligent Connected Vehicle Information Physical System, and proposed the concepts from intelligent connected vehicle system to intelligent connected vehicle information physical complex large system to intelligent connected vehicle system.

The current development of intelligent connected vehicles (ICVs) faces challenges such as unclear product design and development methodologies, difficulty in demonstrating ICVs, and difficulties in widespread adoption. Furthermore, current electric vehicles face issues with charging and range, hindering the smooth integration of ICVs and EVs. Therefore, a new technical solution is urgently needed to address these challenges.

### SUMMARY

The present application provides an Internet-connected device, a smart car, a smart network system and a transportation system to solve the problems of inconvenient charging and short battery life in current smart networked cars.

In order to achieve the above objectives, this application provides the following technical solutions:
In the first aspect, the present application provides a contact network device , comprising a fixed seat and a telescopic rod installed on the fixed seat; a connecting portion adapted to a smart car is formed on the fixed seat, and a connecting piece for connecting the telescopic rod is provided on the fixed seat; the telescopic rod comprises a flat steel and an outer cover tube installed on the connecting piece, one end of the flat steel is connected to the connecting piece on the fixed seat, and the other end is connected to the outer cover tube; a rotating device and an electric push rod connected to the rotating device are provided in the outer cover tube, an antenna, an insulator and a contact shoe are provided at the free end of the electric push rod, a bayonet is provided at one end of the outer cover tube, and an electromagnetic inclined tongue lock is provided on the bayonet; the electric push rod is driven to extend or retract from the end of the outer cover tube where the bayonet is provided; the bayonet is used to connect the neutral wire of the external contact network, and the electromagnetic inclined tongue lock is used to clamp the neutral wire of the external contact network; the contact shoe is used to connect the live wire of the external contact network.

Furthermore, in the above technical solution, the outer cover tube is a square cylindrical tube, the flat steel is parallel to the road surface; and one end of the outer cover tube provided with a bayonet faces the external contact network.

Furthermore, the bayonet is V-shaped, with the fork on the bayonet facing away from the electric push rod; a graphite slider is clamped at the bottom of the bayonet.

Furthermore, the electric shock shoe is composed of steel plates and graphite sliders clamped between the steel plates.

Furthermore, the rotating device is used to drive the electric push rod to rotate, and the electric contact shoe is driven by the rotating device and the electric push rod to approach the external contact network and is connected to the live wire of the external contact network.

Furthermore, a cable drag chain or a spiral wire is also arranged in the outer cover tube.

Furthermore, an ultrasonic radar ranging system and a camera are provided at one end of the outer cover tube with a bayonet, the ultrasonic radar ranging system is connected to the motor signal on the fixing seat, and the camera is connected to the smart car screen data; the ultrasonic radar ranging system is used to detect the distance between the smart car and the external contact network, and control the motor on the fixing seat to extend the telescopic rod according to the set data; the camera is used to shoot the contact network neutral line and display the image information on the smart car screen.

Furthermore, a telescopic device for driving the telescopic rod is provided on the fixed seat, and the telescopic device includes a reduction motor, a gear belt and a guide rail, etc. The output shaft of the reduction motor is connected to the clutch, and the output shaft of the clutch is provided with a steering angle sensor and a torque sensor, and the steering angle sensor and the torque sensor are connected to the electronic control unit signal of the smart car.

Furthermore, a mechanical steering device is installed on the fixed seat, and the mechanical steering device includes a left-turn pin and a right-turn pin. A protruding pin is provided on the telescopic rod. When the clutch is in the engaged state, the left-turn pin and the right-turn pin on the fixed seat are retracted to their original positions; when the clutch is in the disengaged state, the left-turn pin and the right-turn pin are pushed forward, and when the relative displacement of the smart car and the contact network deviates by more than a preset distance, the protruding pin on the telescopic rod touches the right-turn pin or the left-turn pin, and the steering joystick of the smart car is pulled by the brake wire to cause the car to turn left or right.

In a second aspect, the present application provides a smart car, including a chassis and a body mounted on the chassis, wherein a screen, an electronic control unit and a steering wheel assembly are arranged in the body, and the above-mentioned touch-network device is installed on the chassis.

Furthermore, in the above technical solution, the smart car provided in this application is connected to an external contact network via the contact network device. The smart car is equipped with an ultrasonic radar, which is installed on the side surface of the car close to the contact network, or installed on one end of a fixed base close to the contact network. The ultrasonic radar can control the car's steering based on the distance between the car and the contact network detected by it, so that the car travels along the contact network. Specifically, if the left and right side distance between the car and the contact network is greater than 1 meter, exceeding the radar's set value, a relay closes, connecting the power steering system's motor to rotate forward and control the wheels to turn inward; if the distance is less than 1 meter, the relay disconnects, and the car automatically returns to the center position; if the distance is less than 0.5 meters, exceeding another radar set value, another relay closes, connecting the power steering system's motor to rotate backward and control the wheels to turn outward; if the distance is greater than 0.5 meters, the relay disconnects, and the car automatically returns to the center position.

In a third aspect, the present application provides an intelligent network connection system, which is constructed in the middle of the road or on both sides of the road along the direction of the road, to provide a connection position for the above-mentioned contact network device;

The intelligent network system includes a network power supply system and a network information system. The network power supply system is used to supply power to the smart car and charge the battery through the network device, and to keep the smart car on track through the network device; the network information system is used to realize information interconnection between the network power supply system, the network device and the smart car;

The networked power supply system includes a contact network built along the direction of the road in the middle or on both sides of the road. The contact network includes pillars, and contact network live wire bare steel conductors, live wire aluminum cables, insulators, contact network neutral wires, live wire protective covers and top protective covers arranged on the pillars. The contact network live wire bare steel conductors are adapted and connected to the electric shock boots of the contact network device; insulators are installed on the contact network live wire bare steel conductors; the contact network neutral wire is adapted and connected to the bayonet on the contact network device, and the electromagnetic inclined tongue lock on the contact network device is adapted and connected to the contact network neutral wire.

Furthermore, in the above technical solution, the networked information system includes an optical cable arranged along the contact network, optical fibers are separated from the optical cable, WIFI routers are segmentally arranged on the optical fibers, and the antenna interface on the WIFI router is connected to a leaky cable distributed along the contact network.

Furthermore, the networked information system also includes an ultrasonic radar ranging system installed on the pillar, which is used to detect whether there are cars and other objects in the lane, and transmit the detected signals to the cloud via WIFI. The output signal processed by the cloud is then transmitted to the electronic control unit and screen of the smart car, as well as the car controller or mobile phone via WIFI.

Furthermore, two sets of ultrasonic radar ranging systems are installed along the contact network , one set of ultrasonic radar ranging systems is used to detect the positions of all objects in the first lane, and the other set of ultrasonic radar ranging systems is used to detect the positions of all objects in the second lane; the cloud or the main station control center processes the signals received from the ultrasonic radar ranging systems into control signals for controlling the steering, acceleration, deceleration and braking of the smart car.

Furthermore, the networked information system also includes a wireless communication system arranged at a location without a contact network, and the wireless communication system is interconnected with the main station control center and the electronic control unit of the smart car.

Furthermore, the contact network neutral wire is made of square steel.

In a fourth aspect, the present application provides a transportation system, including the above-mentioned intelligent network system, and a smart car adapted to the intelligent network system, wherein the smart car is equipped with the network-connected device;

The smart car can be driven unmanned along the contact network. The contact network device is tightly connected to the live wire and the neutral wire on the contact network through a telescopic rod. The network information system of the smart network system collects the distance between the side of the smart car and the contact network, and then controls the steering of the smart car.

Furthermore, in the above technical solution, the transportation system also includes a main control center and a car controller system interconnected with the main control center, the car controller system is used to realize remote control driving, the car controller system includes a multi-way GSM remote control switch, a camera, a communication network and a remote control device, the remote control device is a mobile phone, a computer, a remote control or a voice controller; the multi-way GSM remote control switch can manually adjust the intelligent car to brake, refuel, decelerate and turn through time intervals and speed gears.

**Compared with the prior art, this application has the following beneficial effects:**
1. The present application provides a contact network device, which is connected to a smart car and is connected to the live wire and the neutral wire of an external contact network through a telescopic rod. That is, the contact network device provided by the present application is installed on a smart car. When driving on a road with a contact network, it can provide power for the electric car and automatically charge the battery, solving the charging and endurance problems of the electric car, and reducing the energy loss of charging and discharging. Furthermore, the contact network device is connected to the external contact network, which realizes the track keeping of the car, providing equipment conditions for further automatic driving of the car.
2. The present application provides an intelligent car equipped with a touch-network device, which can be connected to an intelligent network system established on the road through the touch-network device to obtain electrical energy and various information. The touch-network device can be retracted into the car through a telescopic mechanism and can also be extended.
3. The present application provides an intelligent network connection system, which interacts and connects with the touch-network device installed on the car to provide power and corresponding information support for the car. The intelligent network connection system includes a network connection power supply system and a network connection information system. The network connection power supply system is used to provide power to the electronic appliances and motors of the smart car through the touch-network device, and charge the battery at the same time; the network connection information system is used to realize information interconnection between the network connection power supply system, the touch-network device and the smart car; the intelligent network connection system is built in the middle or on both sides of the road along the direction of the road, and is used in conjunction with the smart car to conveniently solve the car's power, charging and network connection problems.
4. The smart car provided in this application is a smart connected car that adopts the contact network device provided in this application. It can provide sensor information for its automatic driving along the contact network and can also adapt to the swing and bump of the electric car.
5. The structure of the contact network in this application is also different from that of the contact network of electrified railways and trolleybuses. The structure is relatively simpler, low-cost, easy to construct and maintain, and not prone to electric sparks and arc discharges.
6. In the intelligent network system of the present application , leaky cables are laid along the contact network, and a central control center is built at the same time, so that the central control center can exchange information with the computer terminals of multiple electric vehicles, and WIFI can also be used in the car, which is conducive to the electrification and intelligence of the car, thereby achieving the purpose of vehicle networking.
7. In the intelligent connected system provided by this application, an ultrasonic radar ranging system is laid out along the contact network. Based on the number of the ultrasonic radar sensor where the running car is located, not only the running position of each car can be known; but also the running status of other cars in each lane in the urban area can be known, thereby drawing an operating status map. People can use this map to know where there is congestion and where there is smooth traffic, thereby promoting the development of smart cities.
8. The intelligent connected vehicle provided in this application is low-cost and light-weight, and the battery only requires one-fifth of that of existing electric vehicles. The cost is similar to or even lower than that of fuel vehicles.
9. The intelligent network connection system in this application has a power supply function, and the investment per vehicle or per kilowatt is about 50% lower than that of the charging pile system.
10. The cooperation between the intelligent network connection system and the contact network device in this application realizes charging while the car is driving. Generally, there is no need to stop for charging. The driving range in a specific area can be unlimited, and there is no need to worry about charging. When leaving the contact network and driving on other roads, the battery is generally full.
11. The construction and use of the intelligent network connection system in this application, network intelligent unmanned driving can be easily realized at a low cost.
12. The smart car traveling along the road in this application has a strong overload capacity, fast acceleration, high speed, and is safer.
13. The transportation system provided by this application has low operating costs, low maintenance costs, and a long service life. The smart car energy storage device is easy to use with supercapacitor batteries, and the battery pollution is less.
14. The intelligent connected vehicle provided in this application is a major change to fuel vehicles and an important guarantee for the sustainable development of mankind. It surpasses fuel vehicles in terms of cost-effectiveness. At the same price, it has the advantages of strong power, quietness, fast acceleration, convenient electricity use, environmental protection and energy saving.
15. The intelligent connected vehicle provided in this application is an evolution of existing electric vehicles. This product addresses the rigid demands of ordinary consumers for the price, safety, charging, endurance, service life (residual value), etc. of electric vehicles. Its market is very broad. It can be an electric car, an electric truck, an electric commercial vehicle, etc., and it also reduces dependence on lithium resources.
16. The intelligent connected vehicle provided in this application is an evolution of the original intelligent connected vehicle. This product can achieve safe and feasible unmanned driving without the need for expensive lidar and software systems, and it also expands travel convenience and consumer range.

### DESCRIPTION OF THE DRAWINGS

In order to more clearly illustrate the technical solutions in the embodiments of the present application, the following briefly introduces the drawings required for use in the embodiments. Obviously, the drawings described below are only some embodiments of the present application. For those skilled in the art, other drawings can be obtained based on these drawings without inventive effort. It should be understood that the specific shapes and structures shown in the drawings should not generally be regarded as limiting conditions for the implementation of the present application. For example, based on the technical concepts and exemplary drawings disclosed in the present application, those skilled in the art are able to easily make routine adjustments or further optimizations to the addition/reduction/attribution division, specific shapes, positional relationships, connection methods, and dimensional ratios of certain units (components).
Figure1 is a schematic diagram of a state in which a smart car provided by the present application is connected to a contact network of an intelligent network connection system in one embodiment;
Figure2 is a schematic diagram of a top view of the structure of the network access device provided by the present application in an initial state in one embodiment;
Figure3 is a schematic diagram of a top view of the telescopic rod of the network access device provided by the present application in an embodiment when the telescopic rod is fully extended;
Figure4 is a schematic diagram of a top view of the telescopic rod of the network access device provided by the present application in a partially extended state according to an embodiment;
Figure5 is a schematic diagram of the internal structure of a telescopic rod of a network access device provided by the present application in one embodiment, in which the electric push rod of the telescopic rod is in a retracted state;
Figure6 is a schematic diagram of the internal structure of a telescopic rod of a network access device provided by the present application in one embodiment, in which the electric push rod of the telescopic rod is in an extended state;
Figure7 is a schematic structural diagram of the contact network of the network-connected power supply system provided by the present application in one embodiment.

### Description of reference numerals:

1. Smart cars;
2. Contact device; 21. Fixing seat; 211. Left-turn pin; 212. Right-turn pin; 213. Connector; 22. Telescopic rod; 221. Rotating device; 222. Electromagnetic latch lock; 223. Electric push rod; 224. Larger-than-large bayonet; 225. Outer cover; 226. Flat steel; 227. Contact boot; 228. Insulator; 229. Receiving antenna; 2210. Cable chain;
3. Contact network; 31. Top protective cover; 32. Cables (including optical cables and leaky cables); 33. Wi-Fi router; 34. Radar control box; 35. Pillar; 36. Ultrasonic radar; 37. Contact network live steel bare wire; 38. Live aluminum cable; 39. Insulator; 310. Contact network neutral wire; 311. Live wire protective cover.

### DETAILED DESCRIPTION OF THE EMBODIMENTS

application is further described below in detail through specific embodiments in conjunction with the accompanying drawings.

In the description of this application, unless otherwise specified, " plurality " means two or more. Terms such as " first, " " second, " and " third " in this application are intended to distinguish the objects referred to and do not have any special technical connotations (for example, they should not be construed as emphasizing importance or order). Expressions such as "including," "comprising," and "having" also mean " not limited to " (certain units, components, materials, steps, etc.).

" upper ", " lower ", " left ", " right ", " middle ", etc. cited in this application are usually for the convenience of intuitive understanding by comparing with the drawings, and are not absolute limitations on the positional relationship in the actual product. Without departing from the technical concept disclosed in this application, changes in these relative positional relationships should also be regarded as the scope of the description of this application.

### Example

In order to integrate existing smart connected vehicles and electric vehicles, to further expand the concept of networking in smart connected vehicles and integrate the power contact network, to concretize and harden smart connected vehicles, and at the same time to improve the cost performance and make smart connected vehicles more popular, the present application proposes a contact network device that can be installed on a smart car, and a smart connected system used in conjunction with the contact network device.

The inventors consulted relevant materials and found that in the article "Technical and Economic Analysis of Electrified Highways and Electric Vehicles" written by Zhang Yaoping and Liu Benlin, 1.3 Electric Vehicle Power Collection Scheme, (2) Side Power Collection, it is recorded: "The disadvantage of side power collection is that it requires high accuracy for electric vehicles to travel along the road, that is, the vehicle must maintain an appropriate distance from the power supply device on the road during the power collection process and cannot deviate excessively; the side power collection pole must have a high positioning accuracy, such as the vertical deviation of the power collection brush cannot be too large, otherwise it will not be able to contact the grid normally for power collection." Therefore, there are still many problems with the current side power collection technology, and the existence of these problems limits the production and application of side power collection technology.

provided in the present application and the intelligent network connection system used in combination with the touch-net device overcome the shortcomings of side power collection. Applying them to smart cars solves the charging and endurance problems of electric vehicles, and also redefines smart network connection cars. This new network connection system is a major breakthrough and improvement based on the original smart network connection car.

This application installs the contact network device provided by this application on the basis of the original smart car, and obtains a new smart connected car. Further, on this basis, an intelligent connected system used in conjunction with the contact network device is set up, and a new transportation system is constructed as a whole. Specifically, the transportation system is mainly divided into a smart car part and a connected part; the connected part can be divided into an information system (Internet) and a power supply system (contact network). The connected part can be erected in the middle of the road or about 80 cm away from both sides of the road. When a smart car is driving on a road with connected facilities, the connected part provides power and basic sensor information to enable the car to move forward, and the connected part can charge the battery of the car; when a smart car is driving on a road without connected facilities, it is powered by a battery or internal combustion engine in the car, and can be driven by a person or provided with information by a simple remote control driving system, so that the car can move forward.

Therefore, the smart car in this application can be driven on roads with connected facilities as well as on roads without connected facilities.

The system architecture and implementation principles of this new transportation system are described in detail below with reference to the accompanying drawings.

### I. Smart car part

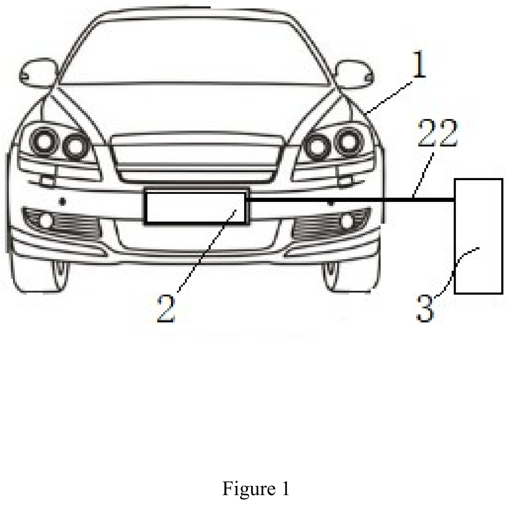

The smart car in this application is based on the existing smart car, with the addition of a contact network device, see Figure 1. Its main principle is: the smart car 1 is connected to the contact network 3 (a power supply device belonging to the intelligent network system) built on the road through the contact network device 2 installed in front of it (of course it can also be on the side or back). The contact network 3 provides electric energy to enable the vehicle to move forward safely at high speed, and at the same time charge the battery.

The contact network device 2 can be installed on the underframe of the automobile chassis, and can be divided into two parts: a fixing seat 21 and a telescopic rod 22.

The aforementioned mounting base 21 can directly utilize the telescopic mechanism of an automatic telescopic door, with only a clutch added to the output shaft of the reduction motor. A steering angle sensor and a torque sensor are also mounted on the clutch shaft (or the belt gear shaft) to provide steering information to the vehicle's electronic control unit (ECU). Alternatively, a mechanical steering mechanism (left-hand and right-hand pins 211 and 212) can be mounted on the mounting base 21. When the clutch is engaged, the left-hand and right-hand pins 211 and 212 on the mounting base 21 retract to their original positions. When the clutch is disengaged, the left-hand and right-hand pins 211 and 212 are pushed forward. When the relative displacement between the vehicle and the contact network exceeds a certain distance (approximately 20 centimeters), the protruding pin on the telescopic rod 22 actuates the right-hand pin 212 (or the left-hand pin 211), which, through the steering wire, pulls the vehicle's steering lever, causing the vehicle to slew left (or right). Alternatively, the left and right turning pins can be replaced with sliding rheostats to provide different resistance values for rotation, thereby controlling left and right rotation.

The telescopic rod 22 is mainly composed of: an electric push rod 223, a larger than mark bayonet 224, an electromagnetic latch lock 222, a flat steel with appropriate elasticity 226, an electric contact shoe 227, a rotating device 221 and a sensor. The structural characteristics of each component are described in turn below:

Electric push rod 223: Choose one with a slightly larger stroke, such as about 400mm.

Greater than bayonet 224: When the car is running, it is impossible to be absolutely stable, and it is inevitable that there will be a certain amount of up and down shaking, which needs to be adapted. A graphite slider is clamped at the bottom of the bayonet.

Electromagnetic latch bolt lock 222: When the neutral wire of the contact network (which also functions as a track) is stuck in the larger-than-size slot, the electromagnetic latch bolt lock is required to hold the neutral wire firmly in place to prevent it from falling out. When the car is about to leave the contact network, the electromagnetic latch bolt lock is energized and opened, and at the same time the clutch is engaged, the motor is started, and the telescopic rod is retracted.

Flat steel 226 with appropriate elasticity: mainly to adapt to the bumps that may occur when the car is running, and its elasticity mainly has a certain value in the up and down directions.

Electric contact shoe 227: The graphite slider is clamped between steel plates to form an electric contact shoe, which is the same as the electric contact shoe of trolleybus.

Rotating device 221: If the electric shock boot 227 is directly extended, it will touch the live wire protection cover 311, so first use the rotating device 221 to rotate the electric push rod 223 90 degrees, then turn on the electric push rod 223, push it to the top and then rotate it back 90 degrees, then retract the electric push rod through the limit switch and retreat about 12 cm, so that the graphite electric shock boot is stuck on the live wire (or a 90-degree pull-folding device can also be used).

Sensors: mainly ultrasonic radar sensors (belonging to the ultrasonic radar ranging system used for distance measurement) and cameras installed in the position larger than the No. 224 bayonet. The ultrasonic radar ranging system mainly detects the distance between the car and the contact network, and controls whether the telescopic rod is extended according to the set data; the camera is set for the driver to observe the contact network neutral line through the screen in the car.

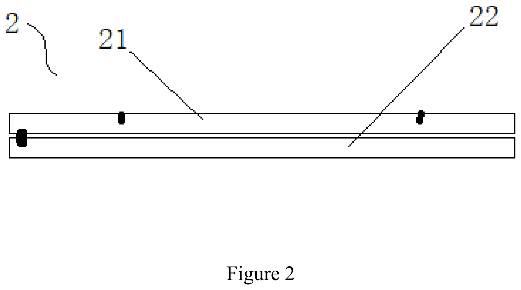

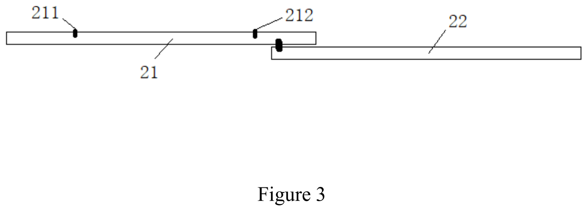

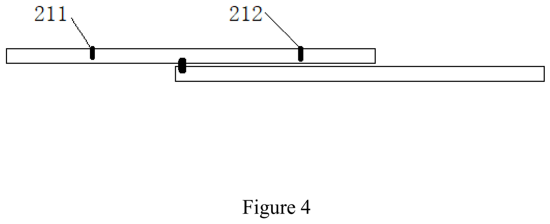

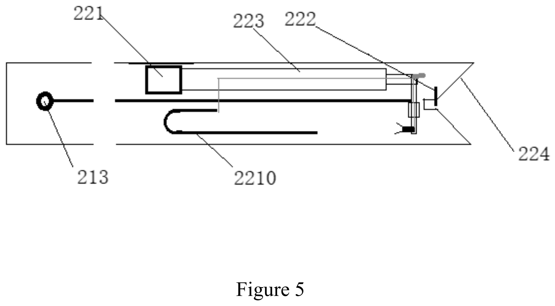

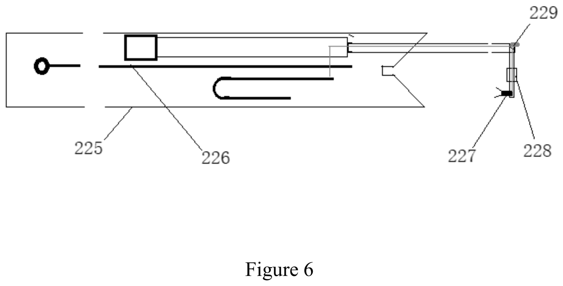

Specifically, referring to Figures 2-6, one end of the fixed seat 21 of the contact network device 2 provided by the present application (for ease of understanding, refer to the automatic door, which is the place where the glass door is clamped on the sliding rail of the automatic door by analogy) is provided with a connecting piece 213 for connecting the telescopic rod 22; the telescopic rod 22 includes an outer cover tube 225 installed on the elastic flat steel, and a rotating device 221 and an electric push rod 223 connected to the rotating device 221 are provided in the outer cover tube 225. The free end of the electric push rod 223 A receiving antenna 229, an insulator 228 and an electric shock shoe 227 are provided. A larger than 224 is provided at one end of the outer cover tube 225, and an electromagnetic inclined tongue lock 222 is provided on the larger than 224. The electric push rod 223 is driven to extend or retract from the end of the outer cover tube 225 provided with the larger than 224. The larger than 224 is used to connect the contact network neutral wire 310, and the electromagnetic inclined tongue lock 222 is used to clamp the contact network neutral wire. The electric shock shoe 227 is used to connect the contact network live wire.

The outer cover tube 225 of the telescopic rod 22 is a square columnar tube, which is installed on one end of a flat steel 226. The other end of the flat steel 226 is connected to the connector 213. The end of the outer cover tube 225 with a bayonet faces the contact network.

The greater than sign bayonet 224 is V-shaped, with the fork on the bayonet facing away from the electric push rod 223; a graphite slider is clamped at the bottom of the bayonet; and the electric shock shoe is composed of steel plates and a graphite slider clamped between the steel plates.

The above-mentioned rotating device is used to drive the electric push rod to rotate. The electric contact boot is driven by the rotating device and the electric push rod to approach the external contact network and is connected to the live wire of the external contact network; a cable drag chain 2210 is also provided in the outer cover tube 225. In one case, the cable drag chain 2210 can be replaced with a spiral wire. Since the electric push rod can be extended back and forth, the cable drag chain 2210 can be provided to prevent the wires drawn from the electric contact boot from being entangled in a disorderly manner. Similarly, a cable drag chain is also provided in the fixing seat 21. In one case, the cable drag chain can be replaced with a spiral wire; since the telescopic rod 22 can be extended back and forth, the cable drag chain can be provided to prevent the wires drawn from the connecting piece 213 from being entangled in a disorderly manner.

When the smart car provided in this application travels on a highway with a catenary system, the telescopic rod of the catenary system device on the vehicle engages the live and neutral wires of the catenary system (the engagement force can be set to approximately 10 kilograms). The car automatically drives along the catenary system, charging simultaneously. The neutral and live wires of the power supply catenary system also serve as tracks. Even if the car unexpectedly experiences up-and-down jolting or zigzagging, the contact shoe and the conductive wire maintain close contact. Only the relative displacement (left-right) between the fixed base of the catenary system and the telescopic rod changes. This change can be used to facilitate the configuration of sensors for automatic steering control. Furthermore, typical vehicle steering controls have an automatic self-centering function, so an automatic self-centering interval of approximately 40 centimeters should be set between the relative displacement of the fixed base and the telescopic rod.

In this way, the smart car can go offline, touch the line and overtake freely. When driving on other roads without power supply system, the contact network device can be retracted into the car and only extended to connect with the contact network in places with network connection facilities.

Since the smart car provided in this application uses the contact network as a power source, its power will be very strong, and naturally the running speed will be greatly improved accordingly.

Furthermore, the smart car provided by this application can be equipped with a neutral-contact track brake device to disperse the car's inertial energy onto the more robust neutral track. The brake disc of this device can be positioned adjacent to the neutral track and only extends toward and securely grips the track when emergency braking is required. Due to the presence of the track, the car will not fling out or roll over even after a collision.

### II. Internet Information System

The networked part of the new transportation system proposed in this application includes a networked information system (Internet) and a networked power supply system (contact network).

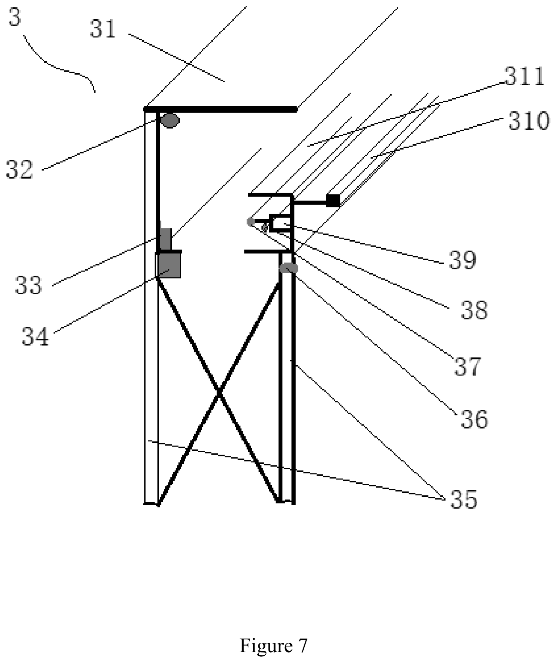

The networked information system primarily consists of optical cables, Wi-Fi routers, leaky cables, ultrasonic radar, cloud-based software, and a communication system. This system is also installed along the power catenary in the middle or on both sides of the highway, as shown in Figure 7. The structural characteristics of each component are described below:
1. Optical cable: Optical cables are laid along the contact network and can be connected to the Internet.
2. Wi-Fi: Separate the optical fiber from the optical cable and then install the Wi-Fi router 33 in sections. Its power supply is connected to the power line in front of the relay.
3. Leaky cable: Use a leaky cable to connect the WIFI antenna interface and distribute it along the contact network; the receiving antenna 229 on the smart car contact network device can receive the Internet signal at a close distance.
4. Ultrasonic Sensors (i.e., ultrasonic radars 36): The ultrasonic radars can be numbered and arranged in two parallel groups on the support posts 35 of the overhead catenary 3. The first group detects all objects in the nearest lane, while the second group detects all objects in the secondary lane. The signals are transmitted via Wi-Fi to cloud-based software. After processing, the signals are also transmitted via Wi-Fi to the onboard computer or mobile phone. The first group of radars can generally detect the presence of other large and medium-sized objects within the lane within 500-1000 meters ahead, allowing the cloud-based software to control acceleration and deceleration.
   Ultrasonic radar can also be used to control the vehicle's steering, forcing it to follow the catenary. The radar can be mounted on the side of the vehicle closest to the catenary or on the end of the mounting bracket 21 closest to the catenary. If the left-right distance between the vehicle and the catenary is greater than 1 meter, exceeding the radar's set value (i.e., the maximum distance setting), a relay closes, energizing the power steering system's motor to rotate forward, causing the wheels to turn inward (i.e., toward the catenary). If the distance is less than 1 meter, the relay opens, and the vehicle automatically returns to the center position. If the distance is less than 0.5 meters, exceeding another radar set value (i.e., the minimum distance setting), another relay closes, energizing the power steering system's motor to rotate backward, causing the wheels to turn outward (i.e., away from the catenary). If the distance is greater than 0.5 meters, the relay opens, causing the vehicle to automatically return to the center position. This ensures that the vehicle follows the catenary within a range of 0.5 to 1 meter. The maximum and minimum distance settings can be set manually.
5. Cloud software: You can directly use existing software or develop new software.
6. Communication system: It is difficult to install Wi-Fi and radar in places where there are no contact network facilities (such as intersections). Therefore, it is necessary to build other wireless communication systems, such as 5G, to provide protection for remote control driving.

The networked information system in this application is used to achieve information interconnection between the networked power supply system, the contact network device, and the smart car. Generally speaking, the networked information system includes an optical cable installed along the contact network, with optical fibers branched from the optical cable. Wi-Fi routers are installed in sections on the optical fibers, and the Wi-Fi antenna interface is connected to a leaky cable distributed along the contact network. The networked information system also includes an ultrasonic radar ranging system installed on a pillar. The ultrasonic radar ranging system is used to detect the position of all objects in the lane and transmit the detected signals via Wi-Fi to the cloud (in one specific application example, this can be the cloud of the central control center). The output signal processed by the cloud is then transmitted via Wi-Fi to the smart car's electronic control unit and screen, as well as the car controller or mobile phone.

In one embodiment, two sets of ultrasonic radar ranging systems are installed along the contact network, one set of ultrasonic radar ranging systems is used to detect the positions of all objects in the first lane, and the other set of ultrasonic radar ranging systems is used to detect the positions of all objects in the second lane; the cloud or the main control center processes the signals received from the ultrasonic radar ranging systems into control signals for controlling the steering, acceleration, deceleration and braking of the smart car.

Of course, in order to adapt to places where no contact network is built, the networked information system also includes a wireless communication system installed in the location where there is no contact network. The wireless communication system is interconnected with the main station control center and the electronic control unit of the smart car to take over the networked information transmission at the contact network location.

### III. Networked power supply system

The grid-connected power supply system mainly refers to the power contact network system connected from the substation, which is referred to as the contact network in this article. The contact network is not an overhead line in the air, but a "side line" that is erected at a relatively low position (about 80 cm from the ground) on the side or middle of the road.

Referring to Figure7, the overhead contact network 3 is constructed in the middle of the road or on both sides of the road along the direction of the road, and is mainly composed of the overhead contact network live steel bare wire 37, live aluminum cable 38, insulator 39, overhead contact network neutral wire 310, live wire protective cover 311, top protective cover 31, pillar 35, etc. The structural characteristics of each component are described below:
1. Live steel bare conductor of contact network: it refers to the conductor in contact with the electric shock shoe, which can be round.
2. Live wire aluminum cable: Due to the high resistivity of steel conductors, aluminum conductors are needed to assist in passing large currents.
3. Insulator: Insulators are only installed at the live wire, and you can buy the appropriate model on the market.
4. Contact network neutral wire: It should be made of square steel to allow the oblique tongue lock to work; since it also serves as a track, it should be made stronger.
5. Live wire protection cover: It is mainly used to protect the live wire and prevent short circuit.
6. Top protective cover: It is mainly used to protect the entire contact network system and prevent the influence of rain, snow and other foreign objects.
7. Pillar: It is used to support the contact network and protective cover. In particular, the contact network pillars should be stronger and have a higher distribution density.

The networked power supply system in this application can be powered by 220V AC, which is convenient for connecting to WIFI and radar equipment; the live wire in the conductive wire is protected by an insulating protective cover, and then protected again by a top protective cover. At the same time, when constructing the contact network, relays are installed at certain intervals to connect and shut down the contact network power supply according to the vehicle's operating conditions (which can be obtained through WIFI), preventing no-load power consumption and accidental electric shock to ensure safety.

### IV. Autonomous driving and unmanned driving

The networked part of the new transportation system proposed in this application cooperates with smart cars to realize automatic driving and unmanned driving. Specifically, automatic driving and unmanned driving can be divided into unmanned driving along the contact network and simple remote-controlled driving.

### 1. Unmanned driving along the overhead line

Unmanned driving along the catenary means that the telescopic rod is locked in the left and right directions by the live and neutral wires of the catenary. The relative displacement of the fixed base and the telescopic rod controls the steering of the vehicle. There are two types of steering control: electronic and mechanical.

The electronic type means that a steering angle sensor and a torque sensor are installed on the clutch shaft of the fixed seat (or on the belt gear shaft) to provide information to the vehicle's electronic control unit (ECU).

The mechanical type means that the best position is when the extended shaft connecting the car's telescopic rod and the fixed seat is in the middle position of the fixed seat. When the deviation to the left (or right) exceeds 20 cm, the protruding pin on the telescopic rod touches the left and right turning pins on the fixed seat, and the car's steering joystick is pulled through the brake wire to make the car turn right (or left).

In addition, cloud-based software can control steering angles based on Wi-Fi installed on the contact line and the vehicle's current location. Radar can also detect the presence of other large and medium-sized objects within the lane within 500-1000 meters ahead of the vehicle, allowing acceleration and deceleration to be controlled through cloud-based software. Generally, braking commands are only issued in emergencies due to the long prediction distance.

Furthermore, we can also use ultrasonic radar to control the steering of smart cars so that they can drive along the contact line.

In summary, of the four steering methods mentioned above, the electronic method is not easy to set the return range and is prone to serpentine swing, so it still needs improvement; the mechanical method is relatively reliable and compatible with other methods, and should be used as the standard steering structure; the cloud-controlled method requires a large amount of data and is easily affected by network system failures and hacker viruses; the radar ranging method is relatively simple and direct.

In short, no matter which unmanned driving method is adopted, the catenary track ensures that the car follows the catenary. Even if the wheel steering fails to meet the requirements, considering that the car can drift, as long as the catenary has sufficient stability to resist the inertia of drifting, it will be sufficient.

### 2. Simple remote-controlled driving

Simple remote control driving mainly consists of a multi-channel GSM remote control switch, a remote-controlled device (such as a mobile phone, computer, remote control, or voice control device), a camera, and a communication network (such as a 5G communication network or WIFI network). The structural characteristics of each component are described below:
A. Multi-channel GSM remote control switch: For example, one of the switches is connected to control the throttle motor forward rotation (fast increase), another switch is connected to control the throttle motor reverse rotation (reverse increase), and another switch controls whether the relay is connected to a large voltage or a small voltage, that is, fast or slow. To ensure greater safety, two GSM remote control switches are required to prevent signal problems.
B. Remote control device: Generally, in an environment without interference, such as at home, you can use voice control, or you can use a computer or remote control to control it. When you are out or in situations where the above three types of control are inconvenient, you can use a mobile phone application to control it.
C. Camera: The main camera is installed at the driver's eyes, and other auxiliary cameras can be installed selectively according to the driver's preference.
D. Communication network: The above components can be connected together by this communication network.

Although the above remote-controlled switch is just a switch, it can control the depth, speed and speed of braking, refueling and steering through time (jog frequency and interval) and speed gear (such as fast or slow). For example, the braking commands include: fast brake, slow brake, and back brake; the refueling commands include: fast acceleration, slow acceleration, and back acceleration; the steering commands include: turn left, turn right, and return to center, etc.

When the smart car provided in this application is traveling on other roads without contact networks, it can be simply remotely controlled through the existing 5G communication network. It is different from existing remote-controlled cars. Compared with existing unmanned autonomous driving technology, this simple remote-controlled driving does not have expensive lidar and autonomous driving intelligent software, has a low cost, a simple principle, and is easy to implement.

This application sets up a contact network device on the smart car, which has a reliable and stable structure. It not only allows the electric car to overtake freely, but also provides sensor information of the electric car traveling along the contact network, and can adapt to the swing and bump of the electric car, basically meeting all road conditions for the use of electric vehicles.

The structure of the contact network proposed in this application is different from that of the contact network of electrified railways and trolleybuses. The structure of the contact network is relatively simpler, low-cost, easy to construct and maintain, and is not prone to generating electric sparks and arc discharges.

The proposed transportation system's interconnected components involve laying leaky cables along the catenary, while also building a central control center. This allows the central control center to exchange information with the computer terminals of multiple electric vehicles. WIFI can also be used in vehicles, facilitating their electrification and intelligence, ultimately achieving the goal of a connected vehicle network.

When the transportation system provided in this application is implemented, the main construction process can be briefly described as follows:
1. Purchase relevant parts to make the network-access device, first assemble the telescopic rod, then connect the telescopic rod to the fixed seat slide rail to obtain the network-access device, and then install the network-access device on the chassis of the existing smart car to make the smart connected car;
2. On suitable sections of the autonomous driving demonstration area, construct and install the intelligent network connection system (i.e. the network connection power supply system and network connection information system built in the middle or on both sides of the road along the road direction), install and connect the power supply, optical cable, WIFI, ultrasonic sensors, etc., and implement the implementation of the network connection part.

To more vividly illustrate the use scenarios of the intelligent connected vehicle provided by this application, the following exemplary scenarios are given below:
For example, a person in a certain area of City A wants to travel to a certain area of City B. They drive their car, powered by a battery, either by themselves or by a remote control company. Assuming they drive about 5 kilometers, they will reach a location in City A where a catenary system is installed. When the car is within 1.5 meters of the catenary system, the contact device on the car automatically or controlledly extends and locks onto the neutral wire of the catenary system via an electromagnetic latch bolt through a larger than (larger than) latch. This latching action provides a switching signal, releasing the electromagnetic clutch mounted on the mounting bracket and activating the rotating mechanism. The device rotates 90 degrees, activating the electric actuator. After reaching the top, it rotates 90 degrees back, retracting the actuator about 12 centimeters via a limit switch, allowing the graphite contact shoe to engage the live wire. This controls the relay, recharging the car and replenishing the consumed energy. At this point, the car can drive itself (less hassle-free) or hire a cloud-based driving service for a lower fee. During driving, if there are no other vehicles ahead, the car can accelerate to 300 kilometers per hour. Before arriving at an exit in City B, the electric push rod in the contact network device is pushed out 12 cm, rotated 90 degrees, retracted again, and then rotated 90 degrees. Then the electromagnetic latch lock is opened and the clutch is closed. The telescopic rod retracts, leaving the contact network, and then the contact network device is retracted into the car, and finally reaches the destination.

Compared with the prior art, the solution provided by this application has at least the following advantages:
1. The present application provides an intelligent car equipped with a contact network device, which can be connected to the contact network established on the road through the contact network device to achieve automatic charging and automatic driving along the contact network.
2. The present application provides an intelligent network connection system, which interacts and connects with a touch-network device installed on a car to provide corresponding information support for the car. The intelligent network connection system includes a network connection power supply system and a network connection information system. The network connection power supply system is used to charge the battery of the smart car through the touch-network device, and to maintain the driving track of the smart car through the touch-network device; the network connection information system is used to realize information interconnection among the network connection power supply system, the touch-network device and the smart car. The intelligent network connection system is built in the middle of the road or on both sides of the road along the direction of the road, and is used in conjunction with the smart car to solve the charging and network connection problems of electric vehicles.
3. The touch-network device provided in this application is installed on a smart car and connected to the intelligent network system built on the road, forming a transportation system as a whole. When the car is traveling on a road with intelligent network system facilities, the intelligent network system provides electricity and basic sensor information, so that the car can be driven by people or automatically drive forward; when the car is traveling on a road without intelligent network system facilities, it is powered by a battery or internal combustion engine, and can be driven by people or provided with information by a simple remote control driving system, so that the car can move forward, solving the problems of electric vehicle charging, endurance and automatic driving application.
4. The smart car provided in this application is an intelligent connected car. It adopts the contact network device provided in this application, which can provide sensor information for its automatic driving along the contact network, and can also adapt to the swing and bump of the electric car. The structure of the contact network in this application is also different from that of the electrified railway and trolleybus. The structure is relatively simpler, low-cost, easy to build and maintain, and not prone to generating electric sparks and arc discharges.
5. In the intelligent network system of the present application , leaky cables are laid along the contact network, and a central control center is built at the same time, so that the central control center can exchange information with the computer terminals of multiple electric vehicles, and WIFI can also be used in the car, which is conducive to the electrification and intelligence of the car, thereby achieving the purpose of vehicle networking.
6. In the intelligent connected system provided by this application, an ultrasonic radar ranging system is laid out along the contact network. Based on the number of the ultrasonic radar sensor where the running car is located, not only the running position of each car can be known; but also the running status of other cars in each lane in the urban area can be known, thereby drawing an operating status map. People can use this map to know where there is congestion and where there is smooth traffic, thereby promoting the development of smart cities.
7. The intelligent connected vehicle provided in this application is low-cost and light-weight, and the battery only requires one-fifth of that of existing electric vehicles. The cost is similar to or even lower than that of fuel vehicles.

The intelligent connected system in this application has a power supply function, and the investment per vehicle or per kilowatt is about 50% lower than that of the charging pile system.

9. The cooperation between the intelligent network connection system and the contact network device in this application realizes charging while the car is driving. Generally, there is no need to stop for charging. The driving range in a specific area can be unlimited, and there is no worry about charging. When leaving the contact network and driving on other roads, the battery is generally full.
the construction and use of the intelligent network connection system in this application, network intelligent unmanned driving can be easily realized at low cost.

11. When the intelligent connected vehicle in this application is traveling on a road with a contact network, it has a strong overload capacity, fast acceleration, high speed (it can reach high-speed rail speed on an ideal road section), and is safer.

12. The transportation system provided by this application has low operating costs, low maintenance costs, and a long service life. The smart car energy storage device is easy to use with supercapacitor batteries, and the battery pollution is less.

13. The intelligent connected vehicle provided in this application is a major change to fuel vehicles and an important guarantee for the sustainable development of mankind. It surpasses fuel vehicles in terms of cost-effectiveness. At the same price, it has the advantages of strong power, quietness, fast acceleration, convenient electricity use, environmental protection and energy saving.

14. The intelligent connected vehicle provided in this application is an evolution of existing electric vehicles. This product addresses the rigid demands of ordinary consumers for electric vehicle price, safety, charging, endurance, service life (residual value), etc. The market is very broad. It can be an electric car, an electric truck, an electric commercial vehicle, etc., and it also reduces dependence on lithium resources.

15. The intelligent connected vehicle provided in this application is an evolution of the original intelligent connected vehicle. This product can achieve safe and feasible unmanned driving without the need for expensive lidar and software systems, and it also expands travel convenience and consumer range.

In summary, this application provides a contact network device that can overcome the shortcomings of side current collection. It can be installed on a smart car and connected to the intelligent network system built on the road. As a whole, a new transportation system can be built.

The technical features of the above embodiments can be combined arbitrarily (as long as there is no contradiction in the combination of these technical features). In order to make the description concise, not all possible combinations of the technical features in the above embodiments are described; these embodiments that are not explicitly written should also be considered to be within the scope of this specification.

The present application has been described in a relatively specific and detailed manner through general explanations and specific embodiments. It should be understood that, based on the technical concept of the present application, several conventional adjustments or further innovations may be made to these specific embodiments; however, as long as they do not depart from the technical concept of the present application, the technical solutions obtained by such conventional adjustments or further innovations also fall within the scope of protection of the claims of the present application.

## Claims

1. A contact network device, **characterized in that** it comprises a fixed seat and a telescopic rod mounted on the fixed seat; a connecting part adapted to a smart car is formed on the fixed seat, and a connecting piece for connecting the telescopic rod is provided on the fixed seat; the telescopic rod comprises a flat steel and an outer cover tube installed on the connecting piece, one end of the flat steel is connected to the connecting piece on the fixed seat, and the other end is connected to the outer cover tube; a rotating device and an electric push rod connected to the rotating device are provided in the outer cover tube, the free end of the electric push rod is provided with an antenna, an insulator and an electric contact shoe, one end of the outer cover tube is provided with a bayonet, and an electromagnetic oblique tongue lock is provided on the bayonet; the electric push rod is driven to extend or retract from the end of the outer cover tube provided with the bayonet; the bayonet is used to connect the neutral wire of the external contact network, and the electromagnetic oblique tongue lock is used to clamp the neutral wire of the external contact network; the electric contact shoe is used to connect the live wire of the external contact network.

2. The contact network device according to claim 1, **characterized in that** the outer cover is a square cylindrical tube, the flat steel is parallel to the road surface; the end of the outer cover provided with the bayonet is facing the external contact network;
The bayonet is V-shaped, with the fork on the bayonet facing away from the electric push rod; a graphite slider is clamped at the bottom of the bayonet;
The electric shock shoe is composed of steel plates and graphite sliders clamped between the steel plates;
The rotating device is used to drive the electric push rod to rotate, and the electric contact shoe is driven by the rotating device and the electric push rod to approach the external contact network and be connected to the live wire of the external contact network;
A cable drag chain or a spiral wire is also provided in the outer cover tube.

3. The contact network device according to claim 1 or 2 is **characterized in that** an ultrasonic radar ranging system and a camera are provided at one end of the outer cover tube having a bayonet, the ultrasonic radar ranging system is connected to the motor signal on the fixing seat, and the camera is connected to the smart car screen data; the ultrasonic radar ranging system is used to detect the distance between the smart car and the external contact network, and controls the motor on the fixing seat according to the set data, and controls whether the telescopic rod is extended through the motor; the camera is used to shoot the contact network neutral line, and display the image information on the smart car screen.

4. The contact network device according to claim 1 is **characterized in that** a telescopic device for driving the telescopic rod is provided on the fixed seat, the telescopic device includes a reduction motor, a gear belt and a guide rail, the output shaft of the reduction motor is connected to the clutch, the output shaft of the clutch is provided with a steering angle sensor and a torque sensor, and the steering angle sensor and the torque sensor are connected to the electronic control unit signal of the smart car.

5. The network contact device according to claim 4 is **characterized in that** a mechanical steering device is installed on the fixed seat, the mechanical steering device includes a left-turn pin and a right-turn pin, and a protruding pin is arranged on the telescopic rod. When the clutch is in the closed state, the left-turn pin and the right-turn pin on the fixed seat are retracted to their original positions;
When the clutch is in the disengaged state, the left turn pin and the right turn pin are pushed forward, and the relative displacement between the smart car and the contact network deviates by more than a preset distance, the protruding pin on the telescopic rod touches the right turn pin or the left turn pin, and the direction joystick of the smart car is pulled through the brake wire to make the car turn left or right.

6. An intelligent car comprising a chassis and a body mounted on the chassis, wherein a screen, an electronic control unit and a steering wheel assembly are provided in the body, **characterized in that** the touch-network device according to any one of claims 1 to 5 is mounted on the chassis.

7. The smart car according to claim 6 is **characterized in that** it is connected to the external contact network through the contact network device, and an ultrasonic radar is installed on the smart car, the ultrasonic radar is installed on the side surface of the car close to the contact network, or the ultrasonic radar is installed on one end of the fixed seat close to the contact network; the ultrasonic radar can control the steering of the car according to the distance between the car and the contact network detected by it, so that the car can travel along the contact network.

8. An intelligent network connection system, **characterized in that** it is constructed along the road in the middle or on both sides of the road to provide a connection position for the contact network device according to any one of claims 1 to 5;
The intelligent network system includes a network power supply system and a network information system, the network power supply system is used to supply power to the smart car and charge the battery through the network contact device, and to keep the driving track of the smart car through the network contact device; the network information system is used to realize the information interconnection of the network power supply system, the network contact device and the smart car;
The networked power supply system includes a contact network built along the direction of the road in the middle or on both sides of the road, the contact network includes pillars, and contact network live wire bare steel conductors, live wire aluminum cables, insulators, contact network neutral wires, live wire protective covers and top protective covers arranged on the pillars, the contact network live wire bare steel conductors are adapted and connected to the electric shock boots of the contact network device; insulators are installed on the contact network live wire bare steel conductors; the contact network neutral wire is adapted and connected to the bayonet on the contact network device, and the electromagnetic inclined tongue lock on the contact network device is adapted and connected to the contact network neutral wire.

9. The intelligent network connection system according to claim 8, **characterized in that** the network connection information system comprises an optical cable arranged along the contact network, an optical fiber is separated from the optical cable, a WIFI router is connected to the optical fiber, and the antenna interface on the WIFI router is connected to a leaky cable distributed along the contact network;
The networked information system also includes an ultrasonic radar ranging system installed on a pillar, which is used to detect whether there are cars and other objects in the lane, and transmit the detected signals to the cloud via WIFI, the signals processed and output by the cloud are then transmitted to the electronic control unit and screen of the smart car, as well as the car controller or mobile phone via WIFI.

10. The intelligent connected system according to claim 9 , **characterized in that** two sets of ultrasonic radar ranging systems are installed along the overhead line , one set of ultrasonic radar ranging systems is used to detect the positions of all objects in the first lane, and the other set of ultrasonic radar ranging systems is used to detect the positions of all objects in the second lane; the cloud or central control center processes the signals received from the ultrasonic radar ranging systems into control signals for controlling the steering, acceleration, deceleration, and braking of the intelligent vehicle;
The network information system also includes a wireless communication system provided at a location without a contact network, wherein the wireless communication system is interconnected with the central control center and the electronic control unit of the smart car;
The contact network neutral wire is made of square steel.

11. A transportation system, **characterized in that** it comprises the intelligent network connection system according to claim 8, and a smart car adapted to the intelligent network connection system, wherein the smart car is equipped with the network contact device;
The smart car can be driven unmanned along the contact network, the contact network device is tightly connected to the live wire and the neutral wire on the contact network through a telescopic rod, the network information system of the smart network system collects the distance between the side of the smart car and the contact network, and then controls the steering of the smart car.

12. The transportation system according to claim 11 , **characterized in that** it also includes a main station control center and a car controller system interconnected with the main station control center, the car controller system is used to realize remote control driving, the car controller system includes a multi-channel GSM remote control switch, a camera, a communication network and a remote control device, and the remote control device is a mobile phone, a computer, a remote controller or a voice controller;
The multi-channel GSM remote control switch can adjust the intelligent car to brake, refuel, slow down and turn through time intervals and speed gears.
